# EUROPÄISCHE PATENTSCHRIFT

(11) **EP 4 001 065 B1**
(45) Veröffentlichungstag und Bekanntmachung des Hinweises auf die Patenterteilung: **20.09.2023**
(21) Anmeldenummer: 20211942.6
(22) Anmeldetag: 04.12.2020
(51) Int. Cl.: B62D 25/14

(54) **INSTRUMENTENTAFELTRÄGER FÜR EIN KRAFTFAHRZEUG**
INSTRUMENT PANEL HOLDER FOR A MOTOR VEHICLE
SUPPORT DU TABLEAU DE BORD POUR UN VÉHICULE AUTOMOBILE

(30) Priorität: 11.11.2020 EP 20207000
(43) Veröffentlichungstag der Anmeldung: 25.05.2022
(73) Patentinhaber: Benteler Automobiltechnik GmbH, 33102 Paderborn (DE)
(72) Erfinder: STEFFENS, Martin, 33100 Paderborn (DE); LAPSIEN, Rainer, 33142 Büren-Wewelsburg (DE); BERGSCHNEIDER, Meinolf, 33178 Borchen-Dörenhagen (DE); WERNEKE, Simon, 33142 Büren (DE); MIKSOVSKY, Thomas, 398 51 Sepekov (CZ)
(74) Vertreter: Ksoll, Peter

(56) Entgegenhaltungen:
- DE-A1-102018 126 048
- DE-U1-202013 011 387
- FR-A1- 3 024 969
- US-A1- 2004 056 463
- US-A1- 2013 154 300
- US-A1- 2016 052 395

## Beschreibung

Die Erfindung betrifft einen Instrumententafelträger für ein Kraftfahrzeug, der einen zwischen den A-Säulen einer Kraftfahrzeugkarosserie eingliederbaren Querträger aufweist.

Instrumententafelträger werden in Kraftfahrzeugen als tragendes Bauteil für diverse Cockpit-Funktionen eingesetzt. Eine der Hauptkomponenten eines Instrumententafelträgers ist der Querträger. Der Querträger ist Teil der Kraftfahrzeugkarosserie und erstreckt sich im Bereich unterhalb der Windschutzscheibe im Wesentlichen horizontal verlaufend quer zwischen den A-Säulen. Der Querträger weist einen fahrerseitigen Längenabschnitt und einen beifahrerseitigen Längenabschnitt auf und ist in der Regel gegen die Stirnwand, also die Trennwand zwischen Motorraum und Fahrzeuginnenraum, sowie gegen den Fahrzeugboden hin zusätzlich abgestützt.

Der Querträger hat eine versteifende Wirkung auf die Kraftfahrzeugkarosserie und dient zur Befestigung der Instrumententafel, wobei dem Querträger außerdem die Aufgabe zukommt, die Instrumententafel selbst auszusteifen. An dem Querträger sind diverse Halterungen vorgesehen, an denen die Instrumententafel sowie weitere Fahrzeugfunktionskomponenten wie die Lenksäule, Heizungs- und Klimaanlage, Airbag, Mittelkonsole, Sicherungskasten oder Handschuhfach befestigt werden.

Die Hauptkräfte durch die Lenksäule und die Lenkeinrichtung, die Gewichtskraft durch die Instrumententafel sowie die Abstützkraft an der Lenkung durch den Fahrer werden hauptsächlich im Bereich der Fahrerseite auf den Querträger übertragen. Die Belastungen des Querträgers auf der Beifahrerseite sind üblicherweise geringer. Daher werden die Querträger regelmäßig mit einem sich über die Länge des Querträgers ändernden Profilquerschnitt hergestellt oder aus Längenabschnitten unterschiedlicher Querschnittsgeometrie zusammengesetzt. Den Kräfteverhältnissen entsprechend weist der Längenabschnitt auf der Fahrerseite einen größeren Profilquerschnitt auf als der Längenabschnitt auf der Beifahrerseite. Durch eine derartige Querschnitts- bzw. Durchmesseranpassung wird der Querträger auf die lokal einwirkenden Kräfte abgestimmt, wodurch eine Gewichtsoptimierung des Querträgers erreicht wird. Zudem kann in gewissem Maße eine Anpassung des Querschnitts an die Bauraumverhältnisse im vorderen Bereich der Kraftfahrzeugkarosserie vorgenommen werden.

Mit der Anbindung des Querträgers eines Instrumententafelträgers an den seitlichen A-Säulen befasst sich die EP 2 499 038 B1. Dort sind Befestigungsöffnungen zur Durchführung von länglichen Befestigungsorganen unmittelbar durch die rohrförmig gestalteten Enden des Querträgers hindurch ausgebildet.

Bei dem aus der EP 2 542 462 B1 bekannten Vorschlag umfasst der Querträger Mittel zur Befestigung eines Endabschnitts des Trägers an einer A-Säule. Die Befestigungsmittel sind durch eine erste Öffnung und eine zweite Öffnung gebildet, wobei die erste Öffnung durch den Träger selbst hindurch ausgebildet ist und die zweite Öffnung durch ein separates am Endabschnitt gefügtes Befestigungselement hindurch ausgebildet ist.

Solche Vorschläge sind auch durch die DE 10 2005 004 605 B4 vorbekannt.

Einen Querträger für einen Instrumententafelträger, bei dem die Endabschnitte abgeflacht und mit Befestigungsöffnungen versehen sind, ist in der WO 2009/080968 A1 offenbart.

Durch die DE 20 2013 011 387 U1 zählt ein Instrumententafelträger für ein Kraftfahrzeug zum Stand der Technik, der einen zwischen den A-Säulen einer Kraftfahrzeugkarosserie eingliederbaren Querträger aufweist, wobei der Querträger zumindest an einem Ende mit einem Montagebauteil zur Befestigung an einer A-Säule versehen ist.

Ein solcher Instrumententafelträger für ein Kraftfahrzeug ist des Weiteren aus der US 2013/154 300 A1 oder der US 2016/052359 A1 bekannt, wobei die US 2013/154 300 A1 einen Instrumententafelträger nach dem Oberbegriff von Anspruch 1 offenbart.

Die US 2004/056463 A1 beschreibt eine Instrumententafelträger für ein Kraftfahrzeug mit einem Querträger und mehrere mit dem Querträger gekoppelte thermoplastische Energieabsorber.

Aus der DE 10 2018 126 048 A1 geht eine Querträgeranordnung hervor, welche mit einer A-Säule eines Fahrzeugs verbindbar ist. Die Querträgeranordnung weist einen rohrförmigen Querträger und ein Befestigungselement auf, um die Querträgeranordnung an der A-Säule des Fahrzeugs zu befestigen. Das Befestigungselement ist beabstandet von dem rohrförmigen Querträger angeordnet. Über ein gekrümmtes Verbindungselement sind der Querträger und das Befestigungselement verbunden.

Bei dem aus der FR 3 024 969 A1 bekannten Instrumententafelträger sind Montagebauteile zur Befestigung des rohrförmigen Querträgers an den A-Säulen vorgesehen, wobei die Montagebauteile ring- bzw. hülsenartige Abschnitte zur Aufnahme eines Rohrendes des Querträgers aufweisen.

Der Erfindung liegt ausgehend vom Stand der Technik die Aufgabe zugrunde, einen Instrumententafelträger zu schaffen mit einer vorteilhaften Anbindung an die A-Säulen eines Kraftfahrzeugs und einem verbesserten Montagebauteil.

Die Lösung dieser Aufgabe besteht in einem Instrumententafelträger gemäß Anspruch 1.

Vorteilhafte Ausgestaltungen und Weiterbildungen der Erfindung sind Gegenstand der abhängigen Ansprüche.

Der Instrumententafelträger weist einen zwischen den A-Säulen einer Kraftfahrzeugkarosserie eingliederbaren Querträger auf. Der Querträger besitzt einen fahrerseitigen Längenabschnitt und einen beifahrerseitigen Längenabschnitt. Vorzugsweise sind der fahrerseitige Längenabschnitt und der beifahrerseitige Längenabschnitt voneinander unabhängig gefertigt und an einer Schnittstelle miteinander verbunden. Wenigstens am fahrerseitigen Ende des Querträgers ist ein erfindungsgemäß ausgestaltetes Montagebauteil zur Befestigung an eine A-Säule vorgesehen.

Das Montagebauteil weist einen Rücken, einen vorderen Seitenschenkel und einen hinteren Seitenschenkel sowie einen oberen Schenkel und einen unteren Schenkel auf. Die Seitenschenkel verlaufen parallel zueinander. Im vorderen Seitenschenkel und im hinteren Seitenschenkel ist jeweils zumindest eine Montageöffnung vorgesehen.

Begriffe wie oben und unten, vorne und hinten, horizontal und vertikal oder Längsrichtung und Querrichtung sowie Oberseite und Unterseite, Fahrerseite, fahrerseitig, Beifahrerseite oder beifahrerseitig beziehen sich auf die Einbaulage des Querträgers zwischen den A-Säulen innerhalb einer Kraftfahrzeugkarosserie.

Ein Fahrzeugkoordinatensystem ist ein dreidimensionales kartesisches Koordinatensystem, um die Achsen innerhalb eines Kraftfahrzeugs zu kennzeichnen. Die x- und y-Achse liegen in einer Horizontalebene (= Fahrbahnebene). Die x-Achse (Fahrzeuglängsachse) befindet sich in der Fahrzeuglängsmittelebene und ist nach vorne waagerecht und in Bewegungsrichtung des Fahrzeugs gerichtet. Die y-Achse (Fahrzeugquerachse) steht senkrecht auf der Fahrzeuglängsmittelebene und zeigt quer zur Bewegungsrichtung des Fahrzeugs. Die z-Achse (Fahrzeughochachse) steht senkrecht auf der x-y-Ebene des Fahrzeugs und zeigt mit ihrer positiven Richtung nach oben.

Der Rücken des Montagebauteils ist abschnittsweise unterbrochen. Der vordere Seitenschenkel und der hintere Seitenschenkel sind durch Riegel bzw. Riegelabschnitte des Rückens verbunden. Der Rücken kann auch als durchgehender Steg ausgeführt sein.

Ein oberer Schenkel ist ein Schenkel, der in z-Achse über einem anderen Schenkel liegt. Demzufolge ist ein unterer Schenkel ein Schenkel, der unterhalb eines anderen Schenkels vorgesehen ist. Der obere Schenkel und der untere Schenkel erstrecken sich vorzugsweise in einer Horizontalebene. Der obere Schenkel und/oder der untere Schenkel können auch geneigt zu einer Horizontalebene verlaufen.

Bevorzugt ist ein oberer Schenkel als Deckelschenkel ausgeführt. Ein Deckelschenkel befindet sich im oberen Bereich des Montagebauteils und kann sich oberhalb der Seitenschenkel oder zwischen den Seitenschenkeln erstrecken.

Im Rahmen der Erfindung ist ein unterer Schenkel insbesondere als Bodenschenkel ausgeführt. Ein Bodenschenkel befindet sich im unteren Bereich des Montagebauteils und kann sich unterhalb der Seitenschenkel oder zwischen den Seitenschenkeln erstrecken.

Zwischen einem oberen Schenkel und einem unteren Schenkel kann ein weiterer Schenkel, nämlich ein Zwischenschenkel, angeordnet sein.

Am beifahrerseitigen Ende des Querträgers kann ein gleiches oder vom Montagebauteil am fahrerseitigen Ende verschiedenes Montagebauteil vorgesehen sein. Das Montagebauteil am beifahrerseitigen Ende des Querträgers kann auch aus dem Rohr des Querträgers selbst ausgebildet sein, beispielsweise durch eine Abplattung, die mit Montageöffnungen versehen ist.

Die erfindungsgemäß ausgestalteten Montagebauteile sind separat gefertigt und an ein Ende des Querträgers gefügt. Die Montagebauteile sind rationell in der Fertigung. Die Montagebauteile können bei grundsätzlich gleichem Aufbau modular an verschiedene Baureihen eines Kraftfahrzeugs und dessen Instrumententafelträger bzw. Querträger angepasst werden.

Eine für die Praxis besonders vorteilhafte Ausgestaltung sieht vor, dass das Montagebauteil durch Abkanten aus einer Blechabwicklung gebildet ist. Die Blechabwicklung ist der ungebogene Zustand des Bleches (Platine), das für die Herstellung des Montagebauteils dient. Anhand der Fertigteilgeometrie des Montagebauteils wird die passende Blechabwicklung festgelegt einschließlich von Biegeverkürzungen durch die Abkantungen bzw. Biegungen.

Alle Schneid-, Stanz- und/oder Bohroperationen, insbesondere die Herstellung der Montageöffnungen, können an der flachen Blechabwicklung hergestellt werden. Je nach Genauigkeitsanforderungen können die Montageöffnungen auch nach dem Abkanten der Blechabwicklung am Montagebauteil hergestellt werden.

Vorteilhaft weist der Rücken des Montagebauteils mit Abstand übereinander angeordnete Riegel auf. Die Riegel erstrecken sich in x-Achse zwischen den Seitenschenkeln und verbinden diese. Die Rückenabschnitte zwischen den Riegeln sind abgekantet und insbesondere nach innen zwischen die Seitenschenkel umgestellt.

Der obere Schenkel, insbesondere der Deckelschenkel und/oder der untere Schenkel, insbesondere der Bodenschenkel ist bzw. sind über eine Abkantung mit dem Rücken verbunden.

Ein oberer Schenkel, insbesondere der Deckelschenkel oder ein unterer Schenkel, insbesondere der Bodenschenkel kann auch von einem Seitenschenkel abgekantet sein. Der obere Schenkel bzw. der Deckelschenkel und/oder der untere Schenkel bzw. der Bodenschenkel ist dabei über eine Abkantung mit dem Seitenschenkel verbunden.

Eine Abkantung ist insbesondere mit einem Biegewinkel von 90° gegenüber dem verbleibenden Flächenteil des Rückens oder eines Seitenschenkels ausgeführt.

Weiterhin können der obere Schenkel bzw. Deckelschenkel und/oder der untere Schenkel bzw. der Bodenschenkel durch von den Seitenschenkeln abgekantete Laschen gebildet sein.

Eine vorteilhafte Ausführungsform eines Montagebauteils sieht vor, dass zumindest ein Zwischenschenkel vorgesehen ist, welcher zwischen die Seitenschenkel ragt.

Der zumindest eine Zwischenschenkel ist insbesondere aus dem Rücken heraus gebildet. Der Zwischenschenkel ist materialeinheitlich einstückiger Bestandteil des Montagebauteils und aus dem Rücken in Richtung zwischen die Seitenschenkel ausgestellt bzw. abgekantet.

Bei einer vorteilhaften Ausgestaltung steht der Zwischenschenkel vom Rücken weg gerichtet gegenüber den Seitenschenkeln vor. Der Zwischenschenkel steht zungenartig in Richtung zum Querträger vor.

Des Weiteren kann der Zwischenschenkel den Querträger kontaktieren. Möglich ist es, dass der Zwischenschenkel mit seinem freien Ende den Querträger im Bereich des Endabschnitts des Querträgers kontaktiert. Über den Zwischenschenkel kann eine zusätzliche Abstützung bzw. Fügung des Montagebauteils mit dem Querträger erfolgen.

Der obere Schenkel bzw. der Deckelschenkel und/oder der untere Schenkel bzw. der Bodenschenkel können zumindest abschnittsweise mit den Seitenschenkeln stoffschlüssig gefügt, insbesondere verschweißt, sein. Auch der sich zwischen den Seitenschenkeln erstreckende Zwischenschenkel kann mit diesen punktuell, abschnittsweise oder über den gesamten Kontaktbereich stoffschlüssig gefügt sein.

Optional kann das Montagebauteil mit Verstärkungselementen, beispielsweise Hülsenkörpern, versehen sein. Die Verstärkungselemente erstrecken sich vorzugsweise zwischen den Seitenschenkeln von der Innenseite des vorderen Seitenschenkels bis zur Innenseite des hinteren Seitenschenkels. Hülsenförmige Verstärkungselemente sind bevorzugt so angeordnet, dass ein längliches Befestigungselement, also insbesondere eine Montageschraube, durch die Montageöffnungen und durch das hülsenförmige Verstärkungselement geführt werden können.

Verstärkungselemente können auch im Montagebauteil selbst ausgebildet sein, beispielsweise umformtechnisch durch Einprägungen, Sicken, Umkantungen und/oder Ausstellungen.

In jedem Seitenschenkel sind zumindest zwei mit vertikalem Abstand zueinander angeordnete Montageöffnungen vorgesehen. Die Montageöffnungen dienen zur Durchführung von länglichen Befestigungsmitteln, insbesondere Montageschrauben, vorzugsweise in Fahrzeuglängsrichtung (x-Achse).

Der obere Schenkel und/oder der untere Schenkel und/oder ein Zwischenschenkel ist jeweils mit einem Abstand relativ zu einer benachbarten Montageöffnung angeordnet ist, wobei der Abstand maximal dem Durchmesser der benachbarten Montageöffnung entspricht. Auf diese Weise verlaufen die jeweiligen Schenkel nahe am bzw. im Bereich der Montageöffnung. Der Abstand bezieht sich auf den kürzesten Abstand zwischen am nächsten zueinander beabstandeten Punkten bzw. Flächen eines Schenkels und der Montageöffnung. Ein Schenkel kann mit seiner Oberseite oder Unterseite den Durchmesser der benachbarten Montageöffnung tangieren. Das bedeutet, der Abstand beträgt 0 mm. Insbesondere handelt es sich um den vertikalen Abstand eines Schenkels gemessen bis zum Außendurchmesser der Montageöffnung. Eine Stützfunktion kann aber auch dadurch realisiert werden, dass ein Schenkel mit einem horizontalen Abstand zum Außendurchmesser einer benachbarten nächstliegenden Montageöffnung verläuft bzw. mit seinem freien Ende mit horizontalem Abstand zur Montageöffnung endet.

Für die Praxis ist davon auszugehen, dass der Abstand zwischen einem Schenkel zum Außendurchmesser einer benachbarten Montageöffnung maximal dem Durchmesser einer Montageöffnung entspricht. Insbesondere beträgt der Abstand bis zur Hälfte des Durchmessers einer Montageöffnung. Bevorzugt ist der Abstand kleiner 5 mm.

Mittels des Montagebauteils kann die Anbindung des Querträgers eines Instrumententafelträgers variabel gestaltet werden jeweils in Anpassung an eine Baureihe eines Kraftfahrzeugs. Dies erfolgt insbesondere durch die geometrische Auslegung des Montagebauteils, vorzugsweise durch die Höhe und die Länge oder Breite der Seitenschenkel und der Höhe und/oder Länge und/oder Breite des Rückens bzw. der Riegel des Rückens und/oder durch die Anordnung der Montageöffnung und insbesondere durch den Abstand zwischen den Montageöffnungen sowie durch die Anordnung des Montagebauteils selbst relativ zum benachbarten Ende des Querträgers, insbesondere in z-Achse.

Besonders vorteilhaft können die Seitenschenkel des Montagebauteils das Ende des Querträgers toleranzausgleichend überlappen.

Das Montagebauteil ist mit den Seitenschenkeln am Ende des Querträgers gefügt, und kann insbesondere geschweißt sein.

Ein erfindungsgemäß ausgestaltetes Montagebauteil kann das Ende bzw. den Endabschnitt des Querträgers kappenartig übergreifen. Das Montagebauteil ist dann wie eine Kappe auf das Ende des Querträgers aufgesetzt. Hierbei kann das stirnseitige Ende des Querträgers innenseitig an den Rücken des Montagebauteils anstoßen.

Das Ende des Querträgers kann auch mit Ausnehmungen oder Ausklinkungen versehen sein, welche zahnartig in bzw. über Zwischenschenkel greifen, die im Montagebauteil vorgesehen sind und vom Rücken weg nach innen in das Montagebauteil gerichtet sind.

Das stirnseitige Ende des Querträgers ist bevorzugt mit einem Abstand zum Rücken angeordnet sein. Im Montagebauteil sind Montageöffnungen zur Durchführung von Befestigungsmitteln, vorzugsweise in Fahrzeuglängsachse (x-Achse) vorgesehen. Gegebenenfalls sind auch in dem mit dem Montagebauteil zusammenwirkenden Endabschnitt des Querträgers entsprechende Montageöffnungen zur Durchführung der Befestigungsmittel angeordnet. Die Montageöffnungen sind so zueinander angeordnet, dass ein bzw. die Befestigungsmittel zweckentsprechend hindurchgeführt werden können.

Jeweils eine Montageöffnung im ersten vorderen Seitenschenkel und eine Montageöffnung im zweiten hinteren Seitenschenkel sind korrespondierend zueinander angeordnet und liegen in Fahrzeuglängsrichtung (x-Achse) auf einer Höhe und haben eine gemeinsame Achse.

Gemäß anderer Ausführungsformen und Modifikationen umfasst der Instrumententafelträger eines oder mehrere der folgenden Merkmale, welche alleine oder in technisch vorteilhafter Kombination vorgesehen sind:
- ein Montagebauteil ist im horizontalen Querschnitt U-förmig konfiguriert mit einem Rücken und zwei Seitenschenkeln;
- ein Montagebauteil weist einen oberen Schenkel, insbesondere im oberen Höhenbereich einen Deckelschenkel und/oder einen unteren Schenkel, insbesondere im unteren Höhenbereich einen Bodenschenkel auf;
- das Montagebauteil ist aus einem Blechzuschnitt bzw. einer Blechabwicklung hergestellt, welches der Abwicklung des Montagebauteils entspricht;
- der Rücken des Montagebauteils ist abschnittsweise unterbrochen und weist mit Abstand übereinander angeordnete Riegel auf, die sich in Fahrzeuglängsrichtung (x-Achse) erstrecken;
- Rückenabschnitte sind an drei Seiten freigeschnitten und nach innen zwischen die Seitenschenkel umgestellt bzw. gerichtet;
- das Montagebauteil ist mit den Seitenschenkeln am Ende des Querträgers gefügt;
- das Montagebauteil umgreift mit den Seitenschenkeln Seitenabschnitte des Endes des Querträgers;
- ein A-säulenseitiger Endabschnitt, insbesondere der fahrerseitige Endabschnitt des Querträgers ist rechteckig konfiguriert;
- in einem oder jedem Endabschnitt des Querträgers sind Montageöffnungen für den Durchgang von Befestigungsmitteln in Fahrzeuglängsrichtung (x-Achse) vorgesehen;
- der fahrerseitige Längenabschnitt des Querträgers ist durch U-O-Formen eines Blechzuschnitts geformt;
- in Längsrichtung des fahrerseitigen Längenabschnitts des Querträgers einander kontaktierende Stoßkanten sind zumindest bereichsweise miteinander stoffschlüssig gefügt;
- der fahrerseitige Längenabschnitt des Querträgers ist aus Schalenbauteilen gebildet, insbesondere aus zwei Halbschalen;
- der fahrerseitige Längenabschnitt des Querträgers weist Abschnitte mit voneinander verschiedenen Wandstärken auf;
- der fahrerseitige Längenabschnitt des Querträgers weist Abschnitte mit voneinander verschiedenen Durchmessern auf;
- der Querträger oder ein Längenabschnitt des Querträgers ist durch Innenhochdruckumformung geformt.

Ein erfindungsgemäßer Instrumententafelträger ist bauteiltechnisch verbessert und weist einen Querträger auf, der vorteilhaft an die jeweilige A-Säule angebunden werden kann. Die Anbindung ist modular an verschiedene Baureihen eines Kraftfahrzeugs anpassbar. Weiterhin ist der Querträger in Längsrichtung bzw. in seiner Längserstreckung belastungsgerecht und biegesteif auslegbar. Wandstärke und Querschnittsgeometrie des Querträgers sind auf die einwirkenden statischen und dynamischen Kräfte ausgelegt. Weiterhin ist der Querträger gewichtsmäßig verbessert durch Einsparung von Material an weniger belasteten Stellen sowie durch eine Querschnittsgestaltung abgestimmt auf die im Kraftfahrzeug aufzunehmenden bzw. einwirkenden Kräfte.

Eine besonders bevorzugte Ausführungsform eines Montagebauteils weist im Bereich seiner Oberseite einen oberseitigen Schenkel, nämlich einen Deckelschenkel, und im Bereich seiner Unterseite einen unteren Schenkel, nämlich einen Bodenschenkel, auf. Der Deckelschenkel und/oder der Bodenschenkel sind ausgehend vom Rücken nach innen in Richtung auf bzw. in die Seitenschenkel umgestellt. Der Deckelschenkel und der Bodenschenkel gewährleisten eine weitere Versteifung des Montagebauteils. Zusätzlich können der Deckelschenkel und/oder der Bodenschenkel mit den Seitenschenkeln des Montagebauteils stoffschlüssig gefügt sein.

Der fahrerseitige Längenabschnitt des Querträgers kann aus zwei Schalenbauteilen zusammengesetzt sein. Der A-säulenseitige Endabschnitt des fahrerseitigen Endabschnitts ist rechteckig konfiguriert. Im Endabschnitt können Montageöffnungen für den Durchgang von Befestigungsmitteln in Fahrzeuglängsrichtung (x-Achse) vorgesehen sein. Weiterhin kann in diesem Endabschnitt zumindest ein sich zwischen den Seitenwänden des Endabschnitts abstützendes Verstärkungselement eingegliedert sein.

Eine weitere Alternative sieht vor, dass der fahrerseitige Längenabschnitt einen Endabschnitt aufweist, welcher aus zwei Schalenbauteilen zusammengesetzt ist. Auf diese Weise können Grundmodule von Querträgern bereitgestellt werden, die in ihrer Länge durch den Endabschnitt auf die jeweilige Modellreihe bzw. Baureihe eines Kraftfahrzeugs ausgelegt werden. Gleiches gilt für die Anbindung an die A-Säulen.

Eine vorteilhafte Ausführungsform eines Querträgers sieht vor, dass der fahrerseitige Längenabschnitt des Querträgers aus einem Blechzuschnitt geformt ist und zwar mittels U-O-Formen. Hierbei wird zunächst eine Vorform durch das U-Formen erzeugt. Anschließend wird die Vorform zu einem dreidimensional geformten, gegebenenfalls in seine Längserstreckung gekrümmt verlaufenden geschlossenen Rohrkörper (O-Formen) umgeformt. Einander kontaktierende Stoßkanten des Blechzuschnitts bzw. des aus dem Blechzuschnitt geformten Längenabschnitts werden zumindest partiell stoffschlüssig miteinander gefügt.

Zumindest der fahrerseitige Längenabschnitt des Querträgers kann in Vertikalebene geteilt sein.

Möglich ist es auch, dass der fahrerseitige Längenabschnitt des Querträgers in einer Horizontalebene geteilt ist.

Bevorzugt ist ein rechteckig konfiguriertes Ende des fahrerseitigen Längenabschnitts des Querträgers.

Weiterhin können Sicken in den Seitenwänden des Endabschnitts des Querträgers vorgesehen sein. Die Sicken erstrecken sich insbesondere in Fahrzeugquerachse bzw. Längsrichtung des Querträgers.

Ausführungsformen der Erfindung sowie erfindungsgemäße Aspekte sind in den nachfolgenden Zeichnungen beschrieben. Es zeigen:
- Figur 1: einen erfindungsgemäßen Instrumententafelträger in einer Perspektive;
- Figur 2: einen fahrerseitigen Längenabschnitt eines Instrumententafelträgers in einer Perspektive;
- Figur 3: eine erste Ausführungsform eines Montagebauteils entsprechend der Darstellung der Figur 2 in einer Perspektive;
- Figur 4: das Montagebauteil in einer Perspektive von hinten;
- Figur 5: das Montagebauteil in einem vertikalen Längsschnitt;
- Figur 6: die Blechabwicklung des Montagebauteils;
- Figur 7: eine zweite Ausführungsform eines Montagebauteils in einer perspektivischen Darstellung;
- Figur 8: das Montagebauteil entsprechend der Figur 7 in einer Perspektive von hinten;
- Figur 9: das Montagebauteil in einem vertikalen Längsschnitt;
- Figur 10: eine dritte Ausführungsform eines Montagebauteils in einer perspektivischen Darstellungsweise;
- Figur 11: das Montagebauteil entsprechend der Darstellung der Figur 10 in einer Ansicht von hinten und
- Figur 12: das Montagebauteil in einem vertikalen Längsschnitt angesetzt an einen andeutungsweise dargestellten Endabschnitt eines Querträgers.

Einander entsprechende Bauteile und Bauteilkomponenten sind in allen Figuren mit den gleichen Bezugszeichen versehen.

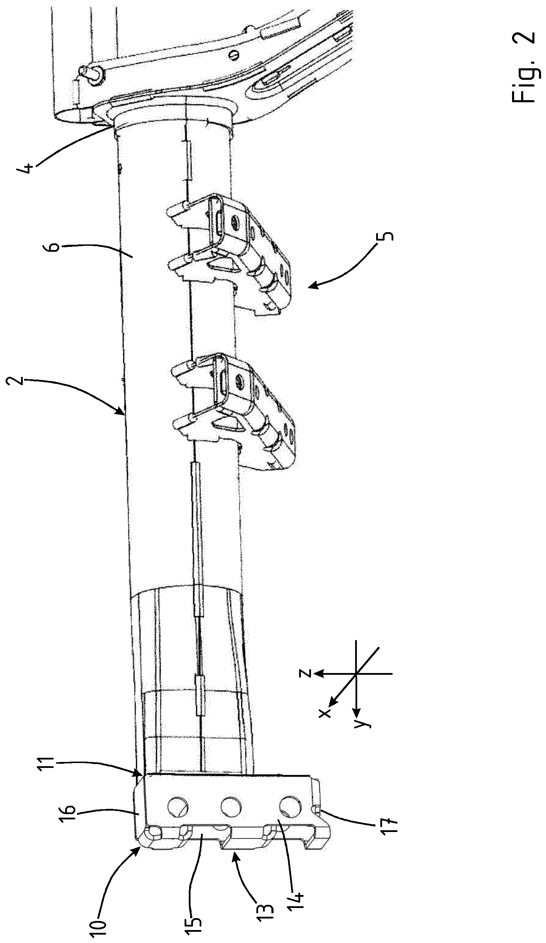

Ein Fahrzeugkoordinatensystem ist in der Figur 2 dargestellt.

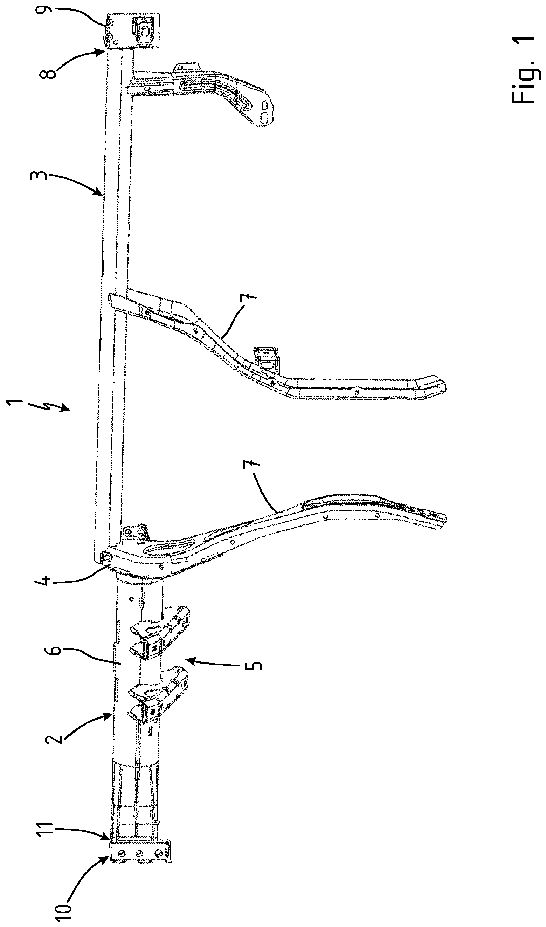

Die Figur 1 zeigt einen Instrumententafelträger in einer perspektivischen Darstellung. Der Instrumententafelträger weist einen Querträger 1 auf. Der Querträger 1 ist zwischen hier nicht dargestellten A-Säulen einer Fahrzeugkarosserie eingliederbar und erstreckt sich im Wesentlichen horizontal verlaufend quer zwischen den A-Säulen. Der Querträger 1 besteht aus einem fahrerseitigen Längenabschnitt 2 und einem beifahrerseitigen Längenabschnitt 3, die über ein Verbindungsbauteil 4 miteinander gekoppelt sind. Der beifahrerseitige Längenabschnitt 3 ist durch ein gradlinig verlaufendes Rohr gebildet. Der fahrerseitige Längenabschnitt 2 ist durch U-O-Formen eines Blechzuschnittes geformt und weist über seine Längserstreckung einen variierenden Querschnittsverlauf auf. Der fahrerseitige Längenabschnitt 2 des Querträgers 1 kann auch aus zwei oder mehreren Schalenbauteilen zusammengesetzt sein, die entlang ihrer Stoßkanten oder überlappend zumindest partiell gefügt sind. Im Bereich der Lenksäulenanbindung 5 besitzt der fahrerseitige Längenabschnitt 2 einen annähernd kreisrund geformten Tragabschnitt 6. Am Querträger 1 sind des Weiteren Abstützstreben 7 vorgesehen.

Am A-säulenseitigen Ende 8 des beifahrerseitigen Längenabschnitts 3 ist ein Montagebauteil 9 an das Ende 8 des Querträgers 1 gefügt. Über dieses Montagebauteil 9 erfolgt die Anbindung des Querträgers 1 an der beifahrerseitigen A-Säule.

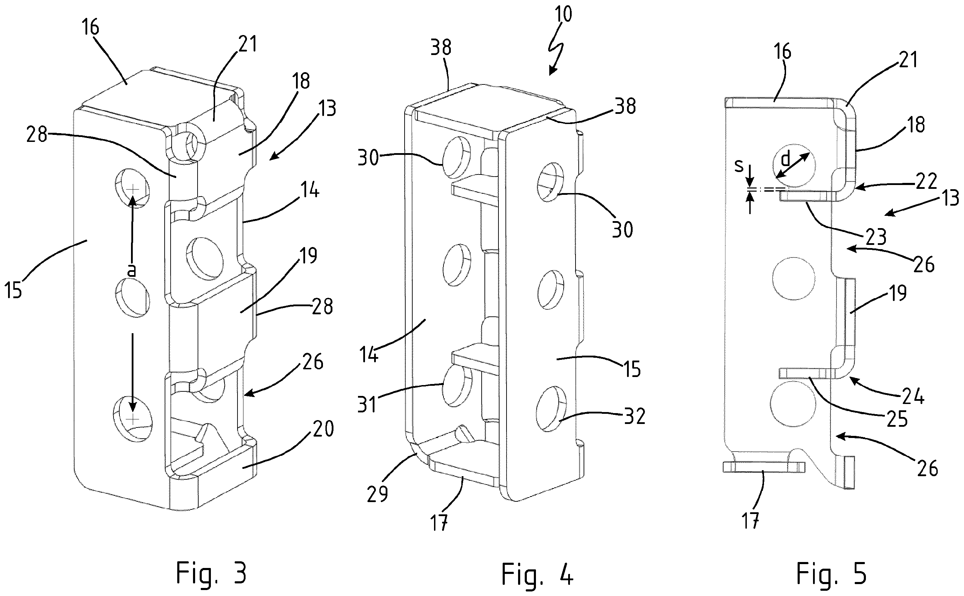

Die Anbindung des Querträgers 1 an die fahrerseitige A-Säule erfolgt über ein Montagebauteil 10, welches am fahrerseitigen Ende 11 des Querträgers 1 gefügt ist. Das Montagebauteil 10 ist anhand der Figuren 3 bis 6 näher erläutert.

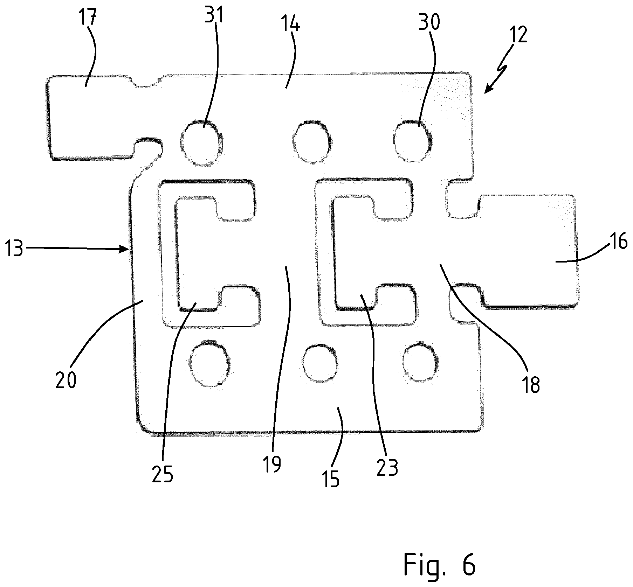

Das Montagebauteil 10 ist durch Abkanten aus einer Blechabwicklung 12 hergestellt, die in der Figur 6 dargestellt ist.

Das Montagebauteil 10 weist einen Rücken 13 sowie zwei zueinander parallele Seitenschenkel 14, 15 auf. Weiterhin besitzt das Montagebauteil 10 einen oberen Schenkel in Form eines Deckelschenkels 16 und einen unteren Schenkel in Form eines Bodenschenkels 17. Der Deckelschenkel 16 und der Bodenschenkel 17 erstrecken sich in y-Achse zwischen dem vorderen Seitenschenkel 14 und dem hinteren Seitenschenkel 15.

Der Rücken 13 ist abschnittsweise unterbrochen. Der Rücken 13 weist Riegel 18, 19, 20 auf. Die Riegel 18, 19, 20 sind mit vertikalem Abstand übereinander angeordnet und erstrecken sich in x-Achse. Der Deckelschenkel 16 ist über eine Abkantung 21 mit dem Rücken 13 bzw. dessen oberen Riegel 18 verbunden. An der in z-Achse gesehenen Unterseite 22 des Riegels 18 ist ein Zwischenschenkel 23 vom Rücken 13 nach innen abgekantet und greift zwischen die Seitenschenkel 14, 15.

Auch an der Unterseite 24 des mittleren Riegels 19 ist ein Abschnitt des Rückens 13 nach innen abgekantet und bildet einen weiteren Zwischenschenkel 25, der zwischen die Seitenschenkel 14, 15 ragt.

Durch die aus dem Rücken 13 abgekanteten Zwischenschenkel 23, 25, die nach innen zwischen die Seitenschenkel 14, 15 ragen, sind Freiräume 26 im Rücken 13 zwischen den Riegeln 18 und 19 bzw. 19 und 20 gebildet.

Der untere Riegel 20 erstreckt sich am unteren bodenseitigen Ende 27 des Montagebauteils 10 zwischen den Seitenschenkeln 14, 15.

Die Riegel 18, 19, 20 sind jeweils über in z-Achse verlaufende gerundete Biegeabschnitte 28 mit den Seitenschenkeln 14, 15 verbunden.

Der untere Riegel 20 kann auch entfallen.

Der untere Bodenschenkel 17 ist vom vorderen Seitenschenkel 14 abgekantet. Der vordere Seitenschenkel 14 geht über eine Abkantung 29 in den Bodenschenkel 17 über.

In jedem Schenkel 14, 15 sind übereinander und mit vertikalem Abstand a zueinander Montageöffnungen 30, 31 vorgesehen. Die obere Montageöffnung 30 im ersten vorderen Schenkel 14 und die obere Montageöffnung 30 im zweiten hinteren Schenkel 15 liegen auf einem Höhenniveau und auf einer Achse. Ebenso liegen die untere Montageöffnung 31 im ersten vorderen Schenkel 14 und die untere Montageöffnung 31 im zweiten hinteren Schenkel 15 auf einem Höhenniveau und auf einer Achse. Die Montageöffnungen 30, 31 im Montagebauteil 10 dienen zur Durchführung von länglichen Befestigungselementen, insbesondere Montageschrauben, in Fahrzeuglängsrichtung (x-Achse), um den Instrumententafelträger an den A-Säulen eines Kraftfahrzeugs zu befestigen.

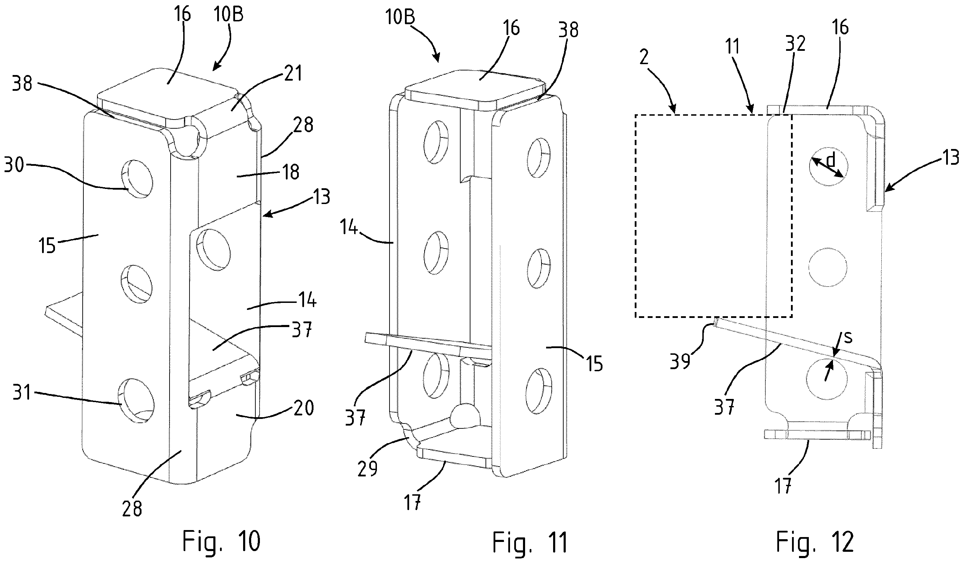

Das Ende 11 des fahrerseitigen Längenabschnitts 2 ist im Wesentlichen rechteckförmig konfiguriert. Das Montagebauteil 10 ist mit den Seitenschenkeln 14, 15 am Ende 11 des Querträgers 1 gefügt (siehe hierzu auch Figur 12). Die Seitenschenkel 14, 15 greifen über den vertikal verlaufenden vorderen Seitenabschnitt und den vertikal verlaufenden hinteren Seitenabschnitt des Endes 11. Der Deckelschenkel 16 kontaktiert das Ende 11 des fahrerseitigen Längenabschnitts 2 oberseitig und liegt auf der Oberseite 32 auf. Stirnseitig stößt der Querträger 1 mit dem Ende 11 an die innenseitig im Montagebauteil 10 liegenden freien Enden der Zwischenschenkel 23 und 25 an.

Unterseitig steht das Montagebauteil 10 in z-Achse gegenüber der Unterseite 33 des fahrerseitigen Längenabschnitts 2 vor.

Die Seitenschenkel 14, 15 ebenso wie der Rücken 13 bzw. die Riegel 18 - 20 des Montagebauteils 10 sind in Abstimmung auf die Querschnittsgeometrie des Endes 11 des fahrerseitigen Längenabschnitts 2 konfiguriert. Über die Länge der Seitenschenkel 14, 15 in Fahrzeugquerachse (y-Achse) wird die Montagelage des Querträgers 1 innerhalb des Kraftfahrzeugs bestimmt.

Die Figur 6 zeigt die Blechabwicklung 12, aus welchem das Montagebauteil 10 umformtechnisch, im Wesentlichen durch Falt- bzw. Abkantvorgänge, hergestellt ist. Die Blechabwicklung 12 stellt den ungebogenen Zustand des Bleches dar, aus welchem das Montagebauteil 10 mit seiner Fertigteilgeometrie hergestellt ist. In die Blechabwicklung 12 sind die Montageöffnungen 30, 31 eingebracht. Des Weiteren ist der Zuschnitt mit Ausstanzungen und Freischnitten versehen, so dass laschenartige Abschnitte gebildet sind, welche den Deckelschenkel 16, den Bodenschenkel 17 ebenso wie die Zwischenschenkel 23, 25 die Riegel 18, 19, 20 und die Seitenschenkel 14, 15 des fertigen Montagebauteils 10 bilden. Die Montageöffnungen 30, 31 können auch nachträglich nach dem Abkanten der Blechabwicklung 12 zum Montagebauteil 10 in die Seitenschenkel 14, 15 eingebracht werden.

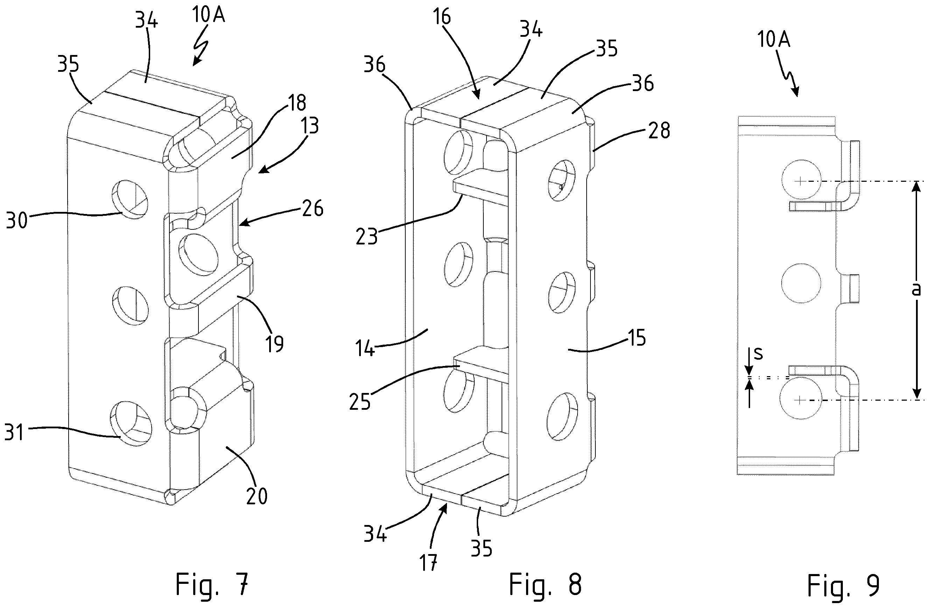

Die Figuren 7 bis 9 zeigen eine zweite Ausführungsform eines Montagebauteils 10A. Dieses entspricht vom grundsätzlichen Aufbau her dem Montagebauteil 10, wie anhand der Figuren 3 bis 6 beschrieben. Das Montagebauteil 10A ist ebenfalls durch Abkanten aus einer Blechabwicklung gebildet.

Bei dem Montagebauteil 10A ist der Deckelschenkel 16 und der Bodenschenkel 17 durch von dem vorderen Seitenschenkel 14 und dem hinteren Seitenschenkel 15 abgekantete Laschen 34, 35 gebildet. Der Deckelschenkel 16 und der Bodenschenkel 17 sind jeweils über eine Abkantung 36 mit dem jeweiligen Seitenschenkel 14 bzw. 15 verbunden.

Eine dritte Ausführungsform eines Montagebauteils 10B zeigen die Darstellungen der Figuren 10 bis 12. Wie die Montagebauteile 10, 10A ist das Montagebauteil 10B durch Abkanten aus einer Blechabwicklung gebildet.

Bei dem Montagebauteil 10B ist ein Zwischenschenkel 37 aus dem Rücken 13 heraus gebildet. Der Zwischenschenkel 37 ist vom Rücken 13 weg gerichtet, erstreckt sich zwischen den Seitenschenkeln 14, 15 und steht in Fahrzeugquerrichtung (y-Achse) gegenüber den Seitenschenkeln 14, 15 vor. Mit seinem freien Ende 39 kontaktiert der Zwischenschenkel 37 die Unterseite 33 des fahrerseitigen Längenabschnitts 2 des Querträgers 1. Hierüber erfolgt eine Abstützung zwischen Montagebauteil 10B und dem Querträger 1. Im Bereich des Kontaktes kann der Zwischenschenkel 37 mit der Unterseite 33 stoffschlüssig gefügt sein.

Bei dem Montagebauteil 10, wie anhand der Figuren 3 bis 5 ersichtlich, erstreckt sich der Deckelschenkel 16 ebenso wie der Bodenschenkel 17 in x-Achse zwischen dem vorderen Seitenschenkel 14 und dem hinteren Seitenschenkel 15. Der Deckelschenkel 16 schließt bündig mit den oberen Kanten 38 der Seitenschenkel 14 bzw. 15 ab.

Bei dem Montagebauteil 10B entsprechend der Darstellung der Figuren 10 bis 12 ist der Deckelschenkel 16 oberhalb der oberseitigen Kanten 38 der Seitenschenkel 14 bzw. 15 angeordnet.

Bei den Montagebauteilen 10, 10A, 10B bewirken die horizontal zwischen den Seitenschenkeln 14, 15 orientierten Schenkel eine Stützfunktion. Daher ist zumindest einer dieser Schenkel möglichst nah zu einer benachbarten Montageöffnung 30, 31 ausgerichtet bzw. zu dieser orientiert. Ein oberer Schenkel, insbesondere der Deckelschenkel 16 und/oder ein unterer Schenkel, insbesondere der Bodenschenkel 17 und/oder ein Zwischenschenkel 23, 25, 37 ist bzw. sind mit einem Abstand s relativ zu einer benachbarten Montageöffnung 30, 31 angeordnet ist, wobei der Abstand s maximal dem Durchmesser d der benachbarten Montageöffnung 30 bzw. 31 entspricht. Der Abstand s ist der kürzeste Abstand zwischen einem Schenkel 16, 17, 23, 25, 37 und einer Montageöffnung 30, 31. Bevorzugt beträgt der Abstand s weniger als die Hälfte des Durchmessers d einer Montageöffnung 30, 31. Bevorzugt ist der Abstand s kleiner als 5 mm.

### Bezugszeichen:

1 - Querträger
2 - fahrerseitiger Längenabschnitt
3 - beifahrerseitiger Längenabschnitt
4 - Verbindungsbauteil
5 - Lenksäulenanbindung
6 - Tragabschnitt
7 - Abstützstreben
8 - Ende
9 - Montagebauteil
10 - Montagebauteil
10A - Montagebauteil
10B - Montagebauteil
11 - fahrerseitiges Ende von 1
12 - Blechabwicklung
13 - Rücken
14 - Seitenschenkel
15 - Seitenschenkel
16 - oberer Schenkel
17 - unterer Schenkel
18 - Riegel
19 - Riegel
20 - Riegel
21 - Abkantung
22 - Unterseite von 18
23 - Zwischenschenkel
24 - Unterseite von 19
25 - Zwischenschenkel
26 - Freiraum
27 - Ende von 10
28 - Biegeabschnitt
29 - Abkantung
30 - Montageöffnung
31 - Montageöffnung
32 - Oberseite von 2
33 - Unterseite von 2
34 - Lasche
35 - Lasche
36 - Abkantung
37 - Zwischenschenkel
38 - obere Kante von 14, 15
39 - freies Ende von 37
a - Abstand
d - Durchmesser von 30, 31
s - Abstand

## Patentansprüche

1. Instrumententafelträger für ein Kraftfahrzeug, der einen zwischen den A-Säulen einer Kraftfahrzeugkarosserie eingliederbaren Querträger (1) aufweist, wobei der Querträger (1) zumindest an einem Ende mit einem Montagebauteil (10) zur Befestigung an einer A-Säule versehen ist, wobei das Montagebauteil (10) einen Rücken (13), zwei zueinander parallele Seitenschenkel (14, 15) sowie einen oberen Schenkel (16) und einen unteren Schenkel (17) aufweist und in jedem Seitenschenkel (14, 15) zumindest eine Montageöffnung (30, 31) vorgesehen ist, wobei die Montageöffnungen (30, 31) zur Durchführung von länglichen Befestigungselementen, insbesondere Montageschrauben, in Fahrzeuglängsrichtung (x-Achse) dienen, um den Instrumententafelträger an einer A-Säule des Kraftfahrzeugs zu befestigen, **dadurch gekennzeichnet dass** das Montagebauteil (10) mit den Seitenschenkeln (14, 15) am Ende (11) eines fahrerseitigen Längenabschnitts (2) des Querträgers (1) gefügt ist,
wobei das Ende (11) im Wesentlichen rechteckförmig konfiguriert ist, wobei die Seitenschenkel (14, 15) über einen vertikal verlaufenden vorderen Seitenabschnitt und einen vertikal verlaufenden hinteren Seitenabschnitt des Endes (11) greifen.

2. Instrumententafelträger nach Anspruch 1, **dadurch gekennzeichnet, dass** das Montagebauteil (10) durch Abkanten aus einer Blechabwicklung (12) gebildet ist.

3. Instrumententafelträger nach Anspruch 1 oder 2, **dadurch gekennzeichnet, dass** der Rücken (13) zumindest zwei mit vertikalem Abstand übereinander angeordnete Riegel (18, 19, 20) aufweist.

4. Instrumententafelträger nach Anspruch 1 bis 3, **dadurch gekennzeichnet, dass** der obere Schenkel (16) und/oder der untere Schenkel (17) über eine Abkantung (21) mit dem Rücken (13) verbunden ist bzw. sind.

5. Instrumententafelträger nach einem der Ansprüche 1 bis 4, **dadurch gekennzeichnet, dass** der obere Schenkel (16) und/oder der untere Schenkel (17) über eine Abkantung (29) mit einem Seitenschenkel (14, 15) verbunden ist bzw. sind.

6. Instrumententafelträger nach einem der Ansprüche 1 bis 5, **dadurch gekennzeichnet, dass** der obere Schenkel (16) und/oder der untere Schenkel (17) durch von den Seitenschenkeln (14, 15) abgekantete Laschen (34, 35) gebildet ist bzw. sind.

7. Instrumententafelträger nach einem der Ansprüche 1 bis 6, **dadurch gekennzeichnet, dass** zumindest ein zwischen die Seitenschenkel (14, 15) ragender Zwischenschenkel (23, 25, 37) vorgesehen ist.

8. Instrumententafelträger nach Anspruch 7, **dadurch gekennzeichnet, dass** der zumindest eine Zwischenschenkel (23, 25, 37) aus dem Rücken (13) heraus gebildet ist.

9. Instrumententafelträger nach Anspruch 7 oder 8, **dadurch gekennzeichnet, dass** der Zwischenschenkel (37) vom Rücken (13) weg gerichtet gegenüber den Seitenschenkeln (14, 15) vorsteht.

10. Instrumententafelträger nach einem der Ansprüche 7 bis 9, **dadurch gekennzeichnet, dass** zumindest ein Zwischenschenkel (37) den Querträger (1) kontaktiert.

11. Instrumententafelträger nach einem der Ansprüche 1 bis 10, **dadurch gekennzeichnet, dass** die Seitenschenkel (14, 15) und der Deckelschenkel (16) und/oder der Bodenschenkel (17) und/oder der Zwischenschenkel (23, 25, 37) zumindest partiell miteinander stoffschlüssig gefügt sind.

12. Instrumententafelträger nach wenigstens einem der Ansprüche 1 bis 11, **dadurch gekennzeichnet, dass** ein oberer Schenkel (16) und/oder ein unterer Schenkel (17) und/oder ein Zwischenschenkel (23, 25, 37) mit einem Abstand (s) relativ zu einer benachbarten Montageöffnung (30, 31) angeordnet ist, wobei der Abstand (s) maximal dem Durchmesser (d) der benachbarten Montageöffnung (30, 31) entspricht.

## Claims

1. Instrument panel holder for a motor vehicle, which has a cross member (1) which can be incorporated between the A-columns of a motor vehicle body, wherein the cross member (1) is equipped at least at one end with a mounting component (10) for fastening to an A-column,
wherein the mounting component (10) has a back (13), two side legs (14, 15) parallel to one another as well as an upper leg (16) and a lower leg (17) and in each side leg (14, 15) is provided at least one mounting opening (30, 31), wherein the mounting openings (30, 31) serve for the passage of elongated fastening elements, in particular mounting screws, in vehicle longitudinal direction (x axis), in order to fasten the instrument panel holder to an A-column of the motor vehicle, **characterised in that**
the mounting component (10) is joined with the side legs (14, 15) at the end (11) of a driver-side longitudinal portion (2) of the cross member (1),
wherein the end (11) is configured to be substantially rectangular in shape, wherein the side legs (14, 15) engage by way of a vertically-extending front side portion and a vertically-extending rear side portion of the end (11).

2. Instrument panel holder according to claim 1, **characterised in that** the mounting component (10) is formed by bending a sheet metal flat pattern (12).

3. Instrument panel holder according to claim 1 or 2, **characterised in that** the back (13) has at least two bars (18, 19, 20) arranged above one another at a vertical distance.

4. Instrument panel holder according to claims 1 to 3, **characterised in that** the upper leg (16) and/or the lower leg (17) is or are connected to the back (13) via a bend (21).

5. Instrument panel holder according to any of claims 1 to 4, **characterised in that** the upper leg (16) and/or the lower leg (17) is or are connected to a side leg (14, 15) via a bend (29).

6. Instrument panel holder according to any of claims 1 to 5, **characterised in that** the upper leg (16) and/or the lower leg (17) is or are formed by tabs (34, 35) bent away from the side legs (14, 15).

7. Instrument panel holder according to any of claims 1 to 6 **characterised in that** at least one intermediate leg (23, 25, 37) is provided projecting between the side legs (14, 15).

8. Instrument panel holder according to claim 7, **characterised in that** the at least one intermediate leg (23, 25, 37) is formed out of the back (13).

9. Instrument panel holder according to claim 7 or 8, **characterised in that** the intermediate leg (37) projects oriented away from the back (13) opposite to the side legs (14, 15).

10. Instrument panel holder according to any of claims 7 to 9, **characterised in that** at least one intermediate leg (37) contacts the cross member (1).

11. Instrument panel holder according to any of claims 1 to 10, **characterised in that** the side legs (14, 15) and the lid leg (16) and/or the base leg (17) and/or the intermediate leg (23, 25, 37) are joined at least partially material-fittingly to one another.

12. Instrument panel holder according to at least one of claims 1 to 11, **characterised in that** an upper leg (16) and/or a lower leg (17) and/or an intermediate leg (23, 25, 37) is arranged with a spacing (s) relative to an adjacent mounting opening (30, 31), wherein the spacing (s) is at most equal to the diameter (d) of the adjacent mounting opening (30, 31).

## Revendications

1. Support de tableau de bord pour véhicule automobile, qui présente une traverse (1) pouvant être intégrée entre les montants A d'une carrosserie de véhicule automobile, dans lequel la traverse (1) est dotée au moins à une extrémité d'un composant de montage (10) pour fixation sur un montant A,
dans lequel le composant de montage (10) présente un dos (13), deux branches latérales (14, 15) parallèles l'une à l'autre ainsi qu'une branche supérieure (16) et une branche inférieure (17) et au moins une ouverture de montage (30, 31) est prévue dans chaque branche latérale (14, 15), dans lequel les ouvertures de montage (30, 31) servent au passage d'éléments de fixation oblongs, en particulier de vis de montage, dans la direction longitudinale du véhicule (axe x) pour fixer le support de tableau de bord à un montant A du véhicule automobile, **caractérisé en ce que**
le composant de montage (10) est joint avec les branches latérales (14, 15) à l'extrémité (11) d'une section longitudinale (2) de la traverse (1) côté conducteur,
dans lequel l'extrémité (11) est configurée sensiblement en forme de rectangle,
dans lequel les branches latérales (14, 15) s'étendant sur une section latérale avant s'étendant verticalement et une section latérale arrière de l'extrémité (11) s'étendant verticalement.

2. Support de tableau de bord selon la revendication 1, **caractérisé en ce que** le composant de montage (10) est formé par pliage à partir d'un dépliage de tôle (12).

3. Support de tableau de bord selon la revendication 1 ou 2, **caractérisé en ce que** le dos (13) présente au moins deux verrous (18, 19, 20) superposés avec un écart vertical.

4. Support de tableau de bord selon les revendications 1 à 3, **caractérisé en ce que** la branche supérieure (16) et/ou la branche inférieure (17) est ou sont connectées au dos (13) par un pliage (21).

5. Support de tableau de bord selon l'une quelconque des revendications 1 à 4, **caractérisé en ce que** la branche supérieure (16) et/ou la branche inférieure (17) est ou sont connectées à une branche latérale (14, 15) par un pliage (29).

6. Support de tableau de bord selon l'une quelconque des revendications 1 à 5, **caractérisé en ce que** la branche supérieure (16) et/ou la branche inférieure (17) est ou sont formées par des attaches (34, 35) repliées par les branches latérales (14, 15).

7. Support de tableau de bord selon l'une quelconque des revendications 1 à 6, **caractérisé en ce qu'**au moins une branche intermédiaire (23, 25, 37) faisant saillie entre les branches latérales (14, 15) est prévue.

8. Support de tableau de bord selon la revendication 7, **caractérisé en ce que** l'au moins une branche intermédiaire (23, 25, 37) est formée à partir du dos (13).

9. Support de tableau de bord selon la revendication 7 ou 8, **caractérisé en ce que** la branche intermédiaire (37) fait saillie par rapport aux branches latérales (14, 15) à l'écart du dos (13).

10. Support de tableau de bord selon l'une quelconque des revendications 7 à 9, **caractérisé en ce qu'**au moins une branche intermédiaire (37) est en contact avec la traverse (1).

11. Support de tableau de bord selon l'une quelconque des revendications 1 à 10, **caractérisé en ce que** les branches latérales (14, 15) et la branche de couvercle (16) et/ou la branche de fond (17) et/ou la branche intermédiaire (23, 25, 37) sont jointes entre elles au moins partiellement par liaison de matière.

12. Support de tableau de bord selon au moins l'une quelconque des revendications 1 à 11, **caractérisé en ce qu'**une branche supérieure (16) et/ou une branche inférieure (17) et/ou une branche intermédiaire (23, 25, 37) est disposée à un écart (s) par rapport à une ouverture de montage (30, 31) voisine, dans lequel l'écart (s) correspond au maximum au diamètre (d) de l'ouverture de montage (30, 31) voisine.
